# EUROPÄISCHE PATENTSCHRIFT

(11) **EP 3 465 383 B1**
(45) Veröffentlichungstag und Bekanntmachung des Hinweises auf die Patenterteilung: **11.03.2020**
(21) Anmeldenummer: 17721656.1
(22) Anmeldetag: 04.05.2017
(51) Int. Cl.: G06F 3/01, G06Q 50/04, G06T 19/20, G02B 27/01, G06T 13/20, G06Q 10/00, G06T 19/00

(54) **VERFAHREN ZUM BETREIBEN EINES ANZEIGESYSTEMS UND ANZEIGESYSTEM**
METHOD FOR OPERATING A DISPLAY SYSTEM AND DISPLAY SYSTEM
PROCÉDÉ PERMETTANT DE FAIRE FONCTIONNER UN SYSTÈME D'AFFICHAGE ET SYSTÈME D'AFFICHAGE

(30) Priorität: 02.06.2016 DE 102016006767
(43) Veröffentlichungstag der Anmeldung: 10.04.2019
(73) Patentinhaber: Audi AG, 85045 Ingolstadt (DE)
(72) Erfinder: KÜHNE, Marcus, 92339 Beilngries (DE)
(86) Internationale Anmeldenummer: PCT/EP2017/060658
(87) Internationale Veröffentlichungsnummer: WO 2017/207207

(56) Entgegenhaltungen:
- WO-A1-2015/140816
- US-A1- 2002 130 862
- US-A1- 2012 117 514
- US-A1- 2014 204 002
- US-A1- 2015 258 432
- WILMOT LI ET AL: "Automated generation of interactive 3D exploded view diagrams", ACM TRANSACTIONS ON GRAPHICS, Bd. 27, Nr. 3, 101, 1. August 2008 (2008-08-01), Seiten 1-7, XP055049074, ISSN: 0730-0301, DOI: 10.1145/1360612.1360700

## Beschreibung

Die Erfindung betrifft ein Verfahren zum Betreiben eines Anzeigesystems und ein Anzeigesystem der in den Oberbegriffen der unabhängigen Patentansprüche angegebenen Art.

Es sind bereits Anzeigesysteme bekannt, welche eine Virtual-Reality-Brille aufweisen, mittels welchen ein in einer virtuellen Umgebung angeordnetes virtuelles Objekt angezeigt werden kann. Derartige Anzeigesysteme können zudem auch dazu ausgelegt sein, die Hände einer Person innerhalb der realen Umgebung zu erfassen. So zeigt beispielsweise die US 2015/062003 A1 ein Anzeigesystem mit einer elektronischen Datenbrille, wobei verschiedenste Gesten eines Trägers der elektronischen Datenbrille erfasst werden können. So ist es beispielsweise möglich, ein Computerspiel in Form eines virtuellen Tennisspiels anzuzeigen, wobei der Träger der elektronischen Datenbrille durch entsprechende Gesten bzw. Handbewegungen einen virtuellen Tennisball schlagen kann.

Darüber hinaus ist es an sich schon bekannt, dass Benutzer durch entsprechend erfasste Gesten beispielsweise ein virtuelles Fahrzeug manipulieren können. Eine derartige Vorgehensweise zeigt beispielsweise die US 2015/278999 A1, wobei ein Benutzer verschiedenste Gesten ausführen kann, welche erfasst werden, und beispielsweise bewirken, dass eine Tür eines angezeigten virtuellen Kraftfahrzeugs geöffnet, Knöpfe im Cockpit des virtuellen Kraftfahrzeugs gedrückt oder das angezeigte virtuelle Fahrzeug gedreht wird, sodass die Perspektive auf das Fahrzeug verändert wird.

Ferner zeigt die DE 10 2011 013 760 A1 noch ein Verfahren zur Informationsvermittlung, bei welchem mittels eines Smartphones Zusatzinformationen derart eingeblendet werden können, dass diese in Form einer augmentierten Realität auf einem Display eines Smartphones die reale Komponente eines Fahrzeugs überlagernd angezeigt werden. Dies ist beispielsweise nützlich, um einem Benutzer eine Anleitung zur Bedienung einer Komponente des Kraftfahrzeugs bereitzustellen, wodurch der Benutzer bei der Reparatur von bestimmten Komponenten des Kraftfahrzeugs unterstützt wird.

Eine besondere Herausforderung bei der Darstellung von virtuellen Objekten mittels einer Virtual-Reality-Brille besteht darin, einem Träger der Virtual-Reality-Brille eine einfache Möglichkeit zur Manipulation des angezeigten virtuellen Objekts sowie zur Veränderung seiner Perspektive auf das virtuelle Objekt zu ermöglichen, wie Beispielsweise im Dokument US 2012/0117514 A1 aufgezeigt.

Es ist daher die Aufgabe der vorliegenden Erfindung, ein Verfahren zum Betreiben eines Anzeigesystems sowie ein Anzeigesystem bereitzustellen, mittels welchen auf besonders einfache Weise einem Träger einer Virtual-Reality-Brille ermöglich wird, das angezeigte virtuelle Objekt auf unterschiedlichste Arten zu betrachten und zu manipulieren.

Diese Aufgabe wird durch ein Verfahren zum Betreiben eines Anzeigesystems sowie durch ein Anzeigesystem mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Bei dem erfindungsgemäßen Verfahren zum Betreiben eines Anzeigesystems wird ein in einer virtuellen Umgebung angeordnetes virtuelles Objekt mittels einer von einer Person aufgesetzten Virtual-Reality-Brille angezeigt. Dabei wird wenigstens eine Hand der Person in der realen Umgebung erfasst. Erfindungsgemäß ist es dabei vorgesehen, dass eine virtuelle Hand innerhalb der virtuellen Umgebung entsprechend der in der realen Umgebung erfassten Hand positioniert und die Darstellung desjenigen Bereichs des virtuellen Objekts verändert wird, in welchen die virtuelle Hand eintaucht.

Dabei ist es möglich, dass auch beide Hände der Person, welche die Virtual-Reality-Brille aufgesetzt hat, fortlaufend erfasst werden, wobei in dem Fall auch entsprechend der erfassten linken und rechten Hand jeweils eine linke und rechte virtuelle Hand innerhalb der virtuellen Umgebung positioniert wird. Das Positionieren der virtuellen Hand innerhalb der virtuellen Umgebung bedeutet im Sinne der Erfindung aber nicht zwangsläufig, dass die virtuelle Hand mittels der Virtual-Reality-Brille auch angezeigt wird. Handbewegungen und die Positionierung der Hand werden also zumindest erfasst und in entsprechende Handbewegungen und Handpositionierungen innerhalb der virtuellen Umgebung umgesetzt.

Der Träger der Virtual-Reality-Brille hat also mittels des erfindungsgemäßen Verfahrens die Möglichkeit, einfach durch Bewegung seiner Hände als Ganzes oder auch durch teilweise Bewegung der Hände, beispielsweise durch Bewegung seiner Finger, diejenigen Bereiche des virtuellen Objekts verändert anzeigen zu lassen, in welche er seine Hand virtuell eintaucht. Die Veränderung der Darstellung desjenigen Bereichs des virtuellen Objekts, in welchen die virtuelle Hand eintaucht, wird allerdings nur dann verändert, wenn dieser Bereich auch gerade mittels der Virtual-Reality-Brille angezeigt wird. Das virtuelle Objekt wird dabei aus einer virtuellen Beobachtungsposition angezeigt, welche basierend auf der Positionserfassung der Virtual-Reality-Brille und der erfassten Ausrichtung der Virtual-Reality-Brille fortlaufend angepasst wird. Bewegt der Träger der Virtual-Reality-Brille beispielsweise seinen Kopf, indem er den Kopf beispielsweise nach links oder rechts verschwenkt, so verändert sich auch seine Perspektive auf das virtuelle Objekt. Gleichermaßen verändert sich seine Perspektive auf das virtuelle Objekt, wenn der Träger der Virtual-Reality-Brille sich fortbewegen sollte. Die Anordnung und Bewegung seiner Hände wirkt sich also nur auf die Darstellung des virtuellen Objekts aus, wenn er auch in der Realität seine Hände sehen würde. Hat er seine Hände beispielsweise derart angeordnet, dass er diese in der Realität nicht sehen würde, so verändert sich auch nicht die Darstellung des virtuellen Objekts, da ja nur derjenige Bereich des virtuellen Objekts überhaupt angezeigt wird, auf welchen die Person auch tatsächlich blickt.

Eine vorteilhafte Ausführungsform der Erfindung sieht vor, dass die virtuelle Hand mittels der Virtual-Reality-Brille innerhalb der virtuellen Umgebung angezeigt wird. Dies vereinfacht die Veränderung der Darstellung desjenigen Bereichs des virtuellen Objekts, in welchen die virtuelle Hand eintaucht, da der Träger der Virtual-Reality-Brille die virtuelle Hand auch in der virtuellen Umgebung angezeigt bekommt. Die virtuelle Hand wird aber auch nur dann mittels der Virtual-Reality-Brille angezeigt, wenn der Träger der Virtual-Reality-Brille seine Hand oder seine Hände derart positioniert hat, dass er diese auch in der Realität bei abgesetzter Virtual-Reality-Brille sehen würde. Dadurch ergibt sich eine besonders intuitive Steuerungs- und Manipulationsmöglichkeit durch eine entsprechende Veränderung der Handposition.

Eine weitere vorteilhafte Ausführungsform der Erfindung sieht vor, dass der Bereich des virtuellen Objekts, in welchen sich die virtuelle Hand hineinbewegt, teilweise oder vollständig transparent geschaltet wird. Unter teilweise transparent Schalten ist dabei zu verstehen, dass der gesamte Bereich des virtuellen Objekts, in welchen sich die virtuelle Hand hineinbewegt, teiltransparent angezeigt wird, sodass dieser Bereich des virtuellen Objekts schon nicht sichtbar ist, allerdings beispielsweise darunterliegende Bereiche ebenfalls angezeigt werden. Vorzugsweise wird also zumindest der Bereich des virtuellen Objekts, in welchen sich die virtuelle Hand hineinbewegt, teilweise oder vollständig ausgeblendet. Der Träger der Virtual-Reality-Brille kann somit Strukturen des virtuellen Objekts einfach ausblenden lassen oder zumindest teiltransparent anzeigen lassen, welche er gerade nicht sehen möchte, ohne sich mit seinem Kopf in diese Richtung hineinbeugen zu müssen.

In weiterer vorteilhafter Ausgestaltung der Erfindung ist es vorgesehen, dass ein Hüllkörper, insbesondere ein kugelförmiger Hüllkörper, um die virtuelle Hand gelegt und zusätzlich der Bereich des virtuellen Objekts, in welchen sich der Hüllkörper hineinbewegt, teilweise oder vollständig transparent geschaltet wird. Somit wird also ein größerer Bereich des virtuellen Objekts teiltransparent oder vollständig transparent angezeigt, wenn der Träger der Virtual-Reality-Brille seine Hand entsprechend innerhalb der virtuellen Umgebung in diesen Bereich hineinbewegt. Der Hüllkörper kann dabei beispielsweise ein Vielfaches der Abmaße der Hände des Trägers der Virtual-Reality-Brille aufweisen, sodass ein besonders großer Teil des virtuellen Objekts ausgeblendet wird, wenn der Träger der Virtual-Reality-Brille seine Hände virtuell in das virtuelle Objekt eintaucht.

In weiterer vorteilhafter Ausgestaltung der Erfindung ist es vorgesehen, dass vor dem teilweise oder vollständig Transparentschalten noch nicht sichtbare innenliegende Strukturen des virtuellen Objekts nach dem teilweise oder vollständig Transparentschalten angezeigt werden. Der Träger der Virtual-Reality-Brille kann also durch entsprechende Handbewegungen bewirken, dass er quasi ins Innere des angezeigten virtuellen Objekts hineinblicken kann, einfach indem er virtuell seine Hände in entsprechend für ihn interessante Bereiche des angezeigten virtuellen Objekts eintaucht. In diesem Zusammenhang kann es beispielsweise auch vorgesehen sein, dass er das virtuelle Objekt quasi mit seinen Händen öffnen, aufklappen oder aufreißen kann, um einen Blick in die innenliegenden Strukturen des virtuellen Objekts zu gewinnen. Der Träger der Virtual-Reality-Brille kann also Oberflächen des angezeigten virtuellen Objekts durch entsprechende Handbewegungen öffnen oder aufreißen, wobei er beliebige Oberflächen des virtuellen Objekts aufreißen bzw. öffnen kann, auch wenn an dieser Stelle in der Realität gar kein Öffnen der Oberfläche ohne eine Zerstörung der Oberfläche möglich wäre. Handelt es sich beispielsweise bei dem angezeigten virtuellen Objekt um eine virtuelles Kraftfahrzeug, so kann der Träger der Virtual-Reality-Brille beispielsweise seine Hände durch eine entsprechende Bewegung zunächst in ein Karosseriebauteil eintauchen und durch Auseinanderbewegen das Karosseriebauteil auseinanderziehen und so einen Blick in die darunterliegenden Strukturen erhalten.

Gemäß einer weiteren vorteilhaften Ausführungsform der Erfindung ist es vorgesehen, dass der Bereich des virtuellen Objekts, in welchen sich die virtuelle Hand hineinbewegt, in Form einer Explosionsanimation in seine Einzelkomponenten zerlegt angezeigt wird. Somit kann der Träger der Virtual-Reality-Brille gemäß dieser alternativen vorteilhaften Ausführungsform der Erfindung auch durch eine entsprechende Bewegung seiner Hand oder seiner Hände bewirken, dass beispielsweise eine bestimmte Baugruppe des angezeigten virtuellen Objekts in seine Einzelteile zerlegt in einer Art Explosionsdarstellung angezeigt wird. Dies kann sowohl bei Vertriebs- als auch bei Entwicklungsanwendungen interessant sein, letzteres beispielsweise wenn sich verschiedene Entwickler über die Gestaltung einzelner Komponenten des betreffenden virtuellen Objekts austauschen möchten. Beispielsweise kann es vorgesehen sein, dass der Träger der Virtual-Reality-Brille eine bestimmte Baugruppe durch entsprechende Bewegung seiner Hände zunächst virtuell ergreift und bei geschlossenen Händen durch auseinanderbewegen seiner Hände in entgegengesetzte Richtungen die Baugruppe virtuell auseinanderziehen kann, wodurch die Baugruppe in ihre Einzelteile zerlegt in Form einer Explosionsdarstellung angezeigt wird. Je weiter der Träger der Virtual-Reality-Brille seine Hände auseinanderbewegt, desto weiter werden die Einzelkomponenten der virtuell gerade ergriffenen Baugruppe auseinander bewegt.

In weiterer vorteilhafter Ausgestaltung der Erfindung ist es vorgesehen, dass mit der Hand ausgeführte Gesten der Person erfasst und entsprechende Zeige- oder Manipulationsaktionen innerhalb der angezeigten virtuellen Umgebung und/oder am virtuellen Objekt ausgeführt werden. Der Träger der Virtual-Reality-Brille kann also nicht nur einen Blick in ansonsten verborgene innenliegende Strukturen des virtuellen Objekts durch Eintauchen seiner Hände in die entsprechenden Bereiche gewinnen, sondern zusätzlich auch noch durch Ausführung vorbestimmter Gesten bestimmte Zeige- oder Manipulationsaktionen bewirken. In diesem Zusammenhang ist es vorzugsweise vorgesehen, dass sobald ein ausgestreckter Zeigefinger erfasst wird, innerhalb der virtuellen Umgebung ein virtueller Zeigestock oder Laserpointer angezeigt wird, welcher eine Fingerachse des Zeigefingers virtuell verlängert. So kann der Träger der Virtual-Reality-Brille beispielsweise auf verschiedenste Komponenten des angezeigten virtuellen Objekts zeigen. Dies kann insbesondere dann vorteilhaft sein, wenn beispielsweise weitere Personen ebenfalls eine Virtual-Reality-Brille aufgesetzt haben und dies ebenfalls angezeigt bekommen.

Eine weitere vorteilhafte Ausführungsform der Erfindung sieht vor, dass ein entsprechend einer mittels der Finger ausgeführten Greifgeste erfasstes virtuelles Element ergriffen und entsprechend einer mit der Hand ausgeführten Bewegung innerhalb der virtuellen Umgebung verschoben wird. Bei dem virtuellen Element kann es sich beispielsweise um eine Komponente des angezeigten virtuellen Objekts oder auch um ein anderes innerhalb der virtuellen Umgebung angeordnetes Objekt handeln. Der Träger der Virtual-Reality-Brille kann also durch Ausführung entsprechender Greifgesten und Bewegungen seiner Hand oder seiner Hände verschiedenste angezeigte virtuelle Elemente innerhalb der virtuellen Umgebung ergreifen und bewegen.

Das erfindungsgemäße Anzeigesystem umfasst eine von einer Person aufsetzbare Virtual-Reality-Brille zum Anzeigen eines in einer virtuellen Umgebung angeordneten virtuellen Objekts. Des Weiteren weist das Anzeigesystem eine Erfassungseinrichtung zum Erfassen wenigstens einer Hand der Person in der realen Umgebung auf. Das erfindungsgemäße Anzeigesystem zeichnet sich dabei dadurch aus, dass das Anzeigesystem eine Steuereinrichtung aufweist, welche dazu ausgelegt ist, eine virtuelle Hand innerhalb der virtuellen Umgebung entsprechend der in der realen Umgebung erfassten Hand zu positionieren und die Darstellung desjenigen Bereichs des virtuellen Objekts zu verändern, in welchen die virtuelle Hand eintaucht. Vorteilhafte Ausgestaltungen des erfindungsgemäßen Verfahrens sind als vorteilhafte Ausgestaltungen des erfindungsgemäßen Anzeigesystems anzusehen, wobei das Anzeigesystem insbesondere Mittel zur Durchführung der Verfahrensschritte aufweist.

Die Ausführungsformen und/oder Beispiele der folgenden Beschreibung, die nicht durch die beigefügten Ansprüche abgedeckt sind, werden nicht als Teil der vorliegenden Erfindung betrachtet.

Die Zeichnung zeigt in:
- Fig. 1: eine schematische Darstellung eines Anzeigesystems, welches eine Virtual-Reality-Brille, eine Erfassungseinrichtung zum Erfassen von Handbewegungen eines Trägers der Virtual-Reality-Brille und eine Steuereinrichtung zum Ansteuern der Virtual-Reality-Brille aufweist;
- Fig. 2: eine schematische Darstellung einer Person, welche die Virtual-Reality-Brille aufgesetzt hat; und in
- Fig. 3: ein in einer virtuellen Umgebung angeordnetes virtuelles Kraftfahrzeug, welches mittels der Virtual-Reality-Brille angezeigt wird, wobei mittels der Erfassungseinrichtung erfasste Hände des Trägers der Virtual-Reality-Brille zusätzlich innerhalb der virtuellen Umgebung angezeigt werden.

In den Figuren werden gleiche oder funktionsgleiche Elemente mit den gleichen Bezugszeichen versehen.

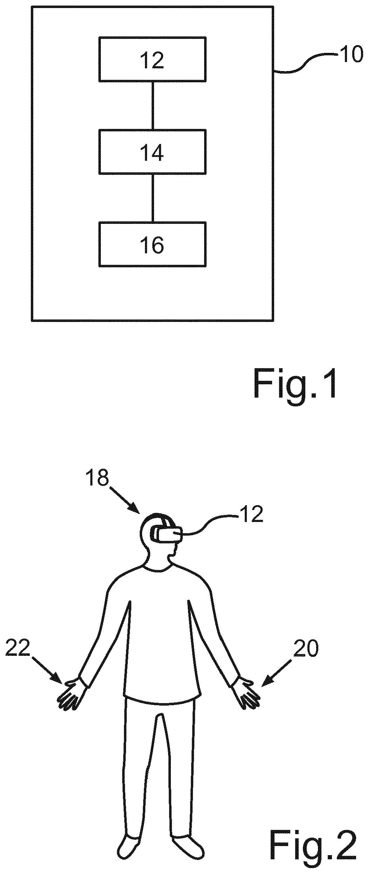

Ein Anzeigesystem 10 zum Anzeigen verschiedenster virtueller Objekte und virtueller Umgebungen ist in einer schematischen Darstellung in Fig. 1 gezeigt. Das Anzeigesystem 10 umfasst eine Virtual-Reality-Brille 12, eine Steuereinrichtung 14 zum Ansteuern der Virtual-Reality-Brille 12 sowie eine Erfassungseinrichtung 16.

In Fig. 2 ist eine Person 18 gezeigt, welche die Virtual-Reality-Brille 12 aufgesetzt hat. Die Erfassungseinrichtung 16 ist dazu ausgelegt, die Hände 20, 22 der Person 18 zu erfassen. Die Erfassungseinrichtung 16 kann dabei beispielsweise direkt an der Außenseite der Virtual-Reality-Brille 12 montiert sein. Vorzugsweise ist die Erfassungseinrichtung 16 derart an der Virtual-Reality-Brille 12 angeordnet, dass die Erfassungseinrichtung 16 im Wesentlichen den gleichen Erfassungsbereich aufweist, wie die Person 18 ihre Umgebung bei abgesetzter Virtual-Reality-Brille 12 sehen würde. Das heißt, dass die Erfassungseinrichtung 16 die Hände 20, 22 auch nur erfassen kann, wenn die Person ihre Hände 20, 22 und ihren Kopf so ausgerichtet hat, dass sie ihre Hände 20, 22 bei abgesetzter Virtual-Reality-Brille 12 auch sehen könnte.

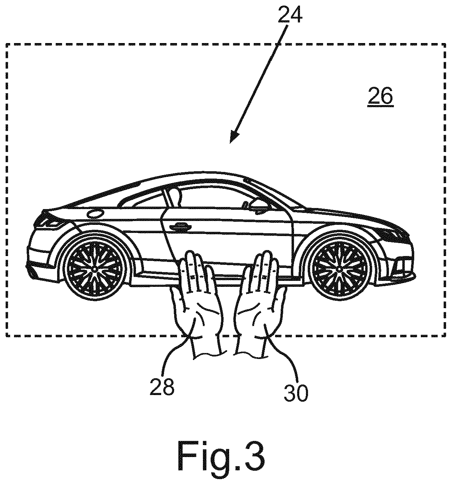

In Fig. 3 ist ein virtuelles Kraftfahrzeug 24 dargestellt, welches innerhalb einer virtuellen Umgebung 26 angeordnet ist. Das virtuelle Kraftfahrzeug 24 wird mittels der Virtual-Reality-Brille 12 angezeigt. Die Perspektive auf das virtuelle Kraftfahrzeug 24 verändert sich dabei entsprechend der Bewegungen der Person 18, welche die Virtual-Reality-Brille 12 aufgesetzt hat. Verschwenkt die Person 18 beispielsweise ihren Kopf nach links oder rechts, so schweift ihr Blick auch entsprechend von links nach rechts über das angezeigte virtuelle Kraftfahrzeug 24. Darüber hinaus kann die Person 18 sich beispielsweise vorwärts oder rückwärts bewegen, entsprechend der erfassten Positionsveränderung der Person 18 verändert sich ebenfalls ihre virtuelle Relativposition zum virtuellen Kraftfahrzeug 24. Hebt nun die Person 18 beispielsweise ihre Hände 20, 22 vor ihr Gesicht, so werden entsprechende virtuelle Hände 28, 30 mittels der Virtual-Reality-Brille 12 innerhalb der virtuellen Umgebung 26 angezeigt. Die Person 18 sieht also die virtuellen Hände 28, 30 durch die Virtual-Reality-Brille 12 genau so, wie sie ihre realen Hände 20, 22 bei abgesetzter Virtual-Reality-Brille 12 sehen würde.

Verändert die Person 18 die Positionierung ihrer Hände 20, 22, so wird dies also mittels der Erfassungseinrichtung 16 entsprechend erfasst, wobei diese Informationen an die Steuereinrichtung 14 weitergegeben werden. In Folge dessen verändert die Steuereinrichtung 14 die Positionierung der virtuellen Hände 28, 30 durch entsprechende Ansteuerung der Virtual-Reality-Brille 12. Durch entsprechende Bewegungen ihrer Hände 20, 22 kann die Person 18 die virtuellen Hände 28, 30 in das virtuelle Kraftfahrzeug 24 eintauchen. Bewegt sich die Person 18 beispielsweise virtuell auf das virtuelle Kraftfahrzeug 24 zu und streckt ihre Hände 20, 22 dabei aus, so könnte es beispielsweise sein, dass die virtuellen Hände 28, 30 in die Beifahrertür eingetaucht werden. Sobald die virtuellen Hände 28, 30 in die Beifahrertür eintauchen, steuert die Steuereinrichtung 14 die Virtual-Reality-Brille 12 derart an, dass die Beifahrertür in dem Bereich, wo die virtuellen Hände 28, 30 eintauchen, teilweise oder auch vollständig transparent geschaltet wird. In Folge dessen werden hier nicht dargestellte innenliegende Strukturen der Beifahrertür mittels der Virtual-Reality-Brille 12 angezeigt. Sobald die virtuellen Hände 28, 30 Tür vollständig durchdringen, kann so beispielsweise der Blick auf den Innenraum des virtuellen Kraftfahrzeugs 24 freigeben werden, und zwar ohne dass die besagte Tür geöffnet werden muss.

Dabei kann es vorgesehen sein, dass eine Art hier nicht dargestellter Hüllkörper um die virtuellen Hände 28, 30 gelegt wird, beispielsweise als kugelförmiger Hüllkörper, wobei bei dem besagten Beispiel derjenige Bereich der Beifahrertür teiltransparent oder vollständig transparent geschaltet wird, welcher von dem Hüllkörper durchdrungen wird. In dem Fall wird also ein wesentlicher größerer Bereich der Beifahrertür transparent oder teiltransparent geschaltet, so dass der Träger 18 der Virtual-Reality-Brille 12 großräumiger einen Blick auf die innenliegenden Strukturen der Beifahrertür oder je nach Eintauchtiefe der virtuellen Hände 28,30 auch auf hinter der Beifahrertür liegende Elemente des virtuellen Kraftfahrzeugs 24 gewinnt.

Alternativ ist es beispielsweise auch möglich, dass die Person 18 ihre Hände 20, 22 ausstreckt und somit ihre virtuellen Hände 28, 30 wiederum in eine bestimmte Komponente des angezeigten virtuellen Kraftfahrzeugs 24 hineinbewegt, wobei in Folge dessen diese Komponente in ihre Einzelteile zerlegt in Form einer Explosionsanimation dargestellt wird. Dadurch kann die Person 18 sich verschiedenste Baugruppen des virtuellen Kraftfahrzeugs 24 in einer Explosionsdarstellung anzeigen lassen, um so verschiedenste Details und Einzelkomponenten genauer zu betrachten.

Darüber hinaus ist es auch möglich, dass mittels der Hände 20, 22 ausgeführte Gesten erfasst und entsprechende Zeige- oder Manipulationsaktionen innerhalb der angezeigten virtuellen Umgebung 26 mittels der Virtual-Reality-Brille 12 umgesetzt werden. Beispielsweise ist es möglich, dass die Person 18 einen Zeigefinger ausstreckt, wobei sobald diese Aktion erfasst wird, innerhalb der virtuellen Umgebung 26 ein virtueller Zeigestock oder Laserpointer angezeigt wird, welcher eine Fingerachse des Zeigefingers virtuell verlängert.

Ferner ist es auch möglich, dass entsprechend einer mit einer der Hände 20, 22 ausgeführten Greifgeste ein virtuelles Element mittels einer der virtuellen Hände 28, 30 ergriffen und entsprechend einer mit einer der Hände 20, 22 ausgeführten Bewegung innerhalb der virtuellen Umgebung verschoben wird. Beispielsweise wäre es möglich, dass die Person 18 mit den angezeigten virtuellen Händen 28, 30 den Außenspiegel des virtuellen Kraftfahrzeugs 24 ergreift und beiseite schiebt, in Folge dessen der Außenspiegel innerhalb der virtuellen Umgebung 26 verschoben und quasi virtuell vom restlichen virtuellen Kraftfahrzeug 24 abmontiert und verschoben wird. Auf gleiche Art und Weise kann im Hinblick auf verschiedenste Komponenten und Baugruppen des virtuellen Kraftfahrzeugs 24 verfahren werden, indem die Person 18 in der Realität mit ihren Händen 20, 22 entsprechende Greifgesten und Bewegungen vornimmt, um das angezeigte virtuelle Kraftfahrzeug 24 oder auch andere hier nicht dargestellte virtuelle Elemente, welche sich innerhalb der virtuellen Umgebung 26 befinden, zu manipulieren und zu verschieben.

## Patentansprüche

1. Verfahren zum Betreiben eines Anzeigesystems (10), mit den Schritten:
- Anzeigen eines in einer virtuellen Umgebung (26) angeordneten virtuellen Objekts (24) mittels einer von einer Person (18) aufgesetzten Virtual-Reality-Brille (12);
- Erfassen wenigstens einer Hand (20, 22) der Person (18) in der realen Umgebung;
- Positionieren einer virtuellen Hand (28, 30) innerhalb der virtuellen Umgebung (26) entsprechend der in der realen Umgebung erfassten Hand (20, 22);
- Verändern der Darstellung desjenigen Bereichs des virtuellen Objekts (24), in welchen die virtuelle Hand (28, 30) eintaucht
**dadurch gekennzeichnet, dass**
- der Bereich des virtuellen Objekts (24), in welchen sich die virtuelle Hand (28, 30) hineinbewegt, teilweise oder vollständig transparent geschaltet wird oder in Form einer Explosionsanimation in seine Einzelkomponenten zerlegt angezeigt wird;
- ein Hüllkörper um die virtuelle Hand (28, 30) gelegt und zusätzlich der Bereich des virtuellen Objekts (24), in welchen sich der Hüllkörper hineinbewegt, teilweise oder vollständig transparent geschaltet wird und/oder mit der Hand (20, 22) ausgeführte Gesten der Person (18) erfasst und entsprechende Zeige- oder Manipulationsaktionen innerhalb der angezeigten virtuellen Umgebung (26) und/oder am virtuellen Objekt (24) ausgeführt werden, so dass sobald ein ausgestreckter Zeigefinger erfasst wird, innerhalb der virtuellen Umgebung (26) ein virtueller Zeigestock oder Laserpointer angezeigt wird, welcher eine Fingerachse des Zeigefingers virtuell verlängert.

2. Verfahren nach Anspruch 1,
**dadurch gekennzeichnet, dass**
die virtuelle Hand (28, 30) mittels der Virtual-Reality-Brille (12) innerhalb der virtuellen Umgebung (26) angezeigt wird.

3. Verfahren nach einem der vorhergehenden Ansprüche,
**dadurch gekennzeichnet, dass**
der Hüllkörper kugelförmig ist.

4. Verfahren nach einem der vorhergehenden Ansprüche,
**dadurch gekennzeichnet, dass**
vor dem teilweise oder vollständig Transparentschalten noch nicht sichtbare innenliegende Strukturen des virtuellen Objekts (24) nach dem teilweise oder vollständig Transparentschalten angezeigt werden.

5. Verfahren nach einem der vorhergehenden Ansprüche,
**dadurch gekennzeichnet, dass**
ein entsprechend einer mittels der Finger ausgeführten Greifgeste erfasstes virtuelles Element ergriffen und entsprechend einer mit der Hand (20, 22) ausgeführten Bewegung innerhalb der virtuellen Umgebung (26) verschoben wird.

6. Anzeigesystem (10), mit
- einer von einer Person (18) aufsetzbaren Virtual-Reality-Brille (12) zum Anzeigen eines in einer virtuellen Umgebung (26) angeordneten virtuellen Objekts (24);
- einer Erfassungseinrichtung (16) zum Erfassen wenigstens einer Hand (20, 22) der Person (18) in der realen Umgebung;
wobei das Anzeigesystem (10) eine Steuereinrichtung (14) aufweist, welche dazu ausgelegt ist, eine virtuelle Hand (28, 30) innerhalb der virtuellen Umgebung (26) entsprechend der in der realen Umgebung erfassten Hand (20, 22) zu positionieren und die Darstellung desjenigen Bereichs des virtuellen Objekts (24) zu verändern, in welchen die virtuelle Hand (28, 30) eintaucht,
**dadurch gekennzeichnet, dass**
das Anzeigesystem (10) dazu ausgelegt ist, den Bereich des virtuellen Objekts (24), in welchen sich die virtuelle Hand (28, 30) hineinbewegt, teilweise oder vollständig transparent zu schalten oder in Form einer Explosionsanimation in seine Einzelkomponenten zerlegt anzuzeigen, und dass das Anzeigesystem (10) dazu ausgelegt ist, einen Hüllkörper um die virtuelle Hand (28, 30) zu legen und zusätzlich den Bereich des virtuellen Objekts (24), in welchen sich der Hüllkörper hineinbewegt, teilweise oder vollständig transparent zu schalten und/oder mit der Hand (20, 22) ausgeführte Gesten der Person (18) zu erfassen und entsprechende Zeige- oder Manipulationsaktionen innerhalb der angezeigten virtuellen Umgebung (26) und/oder am virtuellen Objekt (24) auszuführen, so dass sobald ein ausgestreckter Zeigefinger erfasst wird, innerhalb der virtuellen Umgebung (26) ein virtueller Zeigestock oder Laserpointer angezeigt wird, welcher eine Fingerachse des Zeigefingers virtuell verlängert.

## Claims

1. Method for operating a display system (10) comprising the steps:
- displaying a virtual object (24) arranged in a virtual environment (26) by means of virtual reality glasses (12) worn by a person (18);
- detecting at least one hand (20, 22) of the person (18) in the real environment;
- positioning a virtual hand (28, 30) within the virtual environment (26) corresponding to the hand (20, 22) detected in the real environment;
- changing the representation of that area of the virtual object (24) in which the virtual hand (28, 30) is immersed
**characterised in that**
- the area of the virtual object (24) into which the virtual hand (28, 30) moves is switched to be partially or completely transparent or is displayed broken down into its individual components in the form of an explosion animation;
- a covering body is placed around the virtual hand (28, 30) and, in addition, the area of the virtual object (24) into which the covering body moves is switched to be partially or completely transparent and/or gestures of the person (18) carried out by the hand (20, 22) are detected and corresponding pointing or manipulation actions are carried out within the displayed virtual environment (26) and/or on the virtual object (24), so that as soon as an extended index finger is detected, a virtual pointer stick or laser pointer is displayed within the virtual environment (26), which extends a finger axis of the index finger virtually.

2. Method according to claim 1,
**characterised in that**
the virtual hand (28, 30) is displayed within the virtual environment (26) by means of the virtual reality glasses (12).

3. Method according to any one of the preceding claims,
**characterised in that**
the covering body is spherical.

4. Method according to any one of the preceding claims
**characterised in that**
internal structures of the virtual object (24) which are not yet visible before the partial or complete switching to transparent are displayed after the partial or complete switching to transparent.

5. Method according to any one of the preceding claims
**characterised in that**
a virtual element captured according to a grasping gesture carried out by the fingers is gripped and displaced within the virtual environment (26) according to a movement carried out by hand (20, 22).

6. Display system (10) comprising
- virtual reality glasses (12), which can be worn by a person (18), for displaying a virtual object (24) arranged in a virtual environment (26);
- a detection device (16) for detecting at least one hand (20, 22) of the person (18) in the real environment;
wherein the display system (10) has a control device (14) which is designed to position a virtual hand (28, 30) within the virtual environment (26) corresponding to the hand (20, 22) detected in the real environment, and to change the representation of the area of the virtual object (24) in which the virtual hand (28, 30) is immersed,
**characterised in that**
the display system (10) is designed to switch the area of the virtual object (24), into which the virtual hand (28, 30) is moving, to be partially or completely transparent or to display this broken down into its individual components in the form of an explosion animation, and **in that** the display system (10) is designed to place a covering body around the virtual hand (28, 30) and additionally to switch the area of the virtual object (24), into which the covering body is moving, to be partially or completely transparent and/or to detect gestures of the person (18) carried out by the hand (20, 22) and corresponding pointing or manipulation actions carried out within the displayed virtual environment (26) and/or on the virtual object (24), so that as soon as an extended index finger is detected, a virtual pointer stick or laser pointer is displayed within the virtual environment (26), which extends a finger axis of the index finger virtually.

## Revendications

1. Procédé pour faire fonctionner un système d'affichage (10), comprenant les étapes consistant à :
- afficher un objet virtuel (24) disposé dans un environnement virtuel (26) au moyen de lunettes de réalité virtuelle (12) portées par une personne (18) ;
- détecter au moins une main (20, 22) de la personne (18) dans l'environnement réel ;
- positionner une main virtuelle (28, 30) au sein de l'environnement virtuel (26) en fonction de la main (20, 22) détectée dans l'environnement réel ;
- modifier la représentation de la zone de l'objet virtuel (24) dans laquelle la main virtuelle (28, 30) plonge
**caractérisé en ce que**
- la zone de l'objet virtuel (24), dans laquelle la main virtuelle (28, 30) se déplace est sélectionnée partiellement ou complètement transparente ou affichée sous la forme d'une animation en explosion décomposée en ses composants individuels ;
un corps enveloppant est placé autour de la main virtuelle (28, 30) et, en plus de la zone de l'objet virtuel (24) dans laquelle se déplace le corps enveloppant, est sélectionné partiellement ou complètement transparent et/ou détecte des gestes exécutés par la main (20, 22) de la personne (18), et des actions de pointage ou de manipulation correspondantes sont effectuées dans l'environnement virtuel affiché (26) et/ou au niveau de l'objet virtuel (24), de sorte que dès qu'un index étendu est détecté, une baguette d'indication virtuelle ou un pointeur laser est affiché(e), qui étend virtuellement un axe de doigt de l'index dans l'environnement virtuel (26).

2. Procédé selon la revendication 1,
**caractérisé en ce que**
la main virtuelle (28, 30) est affichée au moyen des lunettes de réalité virtuelle (12) dans l'environnement virtuel (26).

3. Procédé selon l'une des revendications précédentes,
**caractérisé en ce que**
le corps enveloppant est sphérique.

4. Procédé selon l'une des revendications précédentes,
**caractérisé en ce que**
avant la sélection d'une transparence totale ou partielle, des structures internes de l'objet virtuel (24) qui ne sont pas encore visibles sont affichées après la sélection de la transparence totale ou partielle.

5. Procédé selon l'une des revendications précédentes,
**caractérisé en ce que**
un élément virtuel détecté au moyen de gestes de préhension effectué par les doigts est saisi, et est déplacé dans l'environnement virtuel (26) en fonction d'un déplacement correspondant effectué à la main (20, 22).

6. Système d'affichage (10) avec
- des lunettes de réalité virtuelle (12) pouvant être portées par une personne (18) pour afficher un objet virtuel (24) disposé dans un environnement virtuel (26) ;
- un dispositif de détection (16) pour détecter au moins une main (20, 22) de la personne (18) dans l'environnement réel ;
dans lequel le système d'affichage (10) présente un dispositif de commande (14), qui est conçu pour positionner une main virtuelle (28, 30) dans l'environnement virtuel (26) en fonction de la main (20, 22) détectée dans l'environnement réel pour changer le positionnement et la représentation de la zone de l'objet virtuel (24) dans laquelle la main virtuelle (28, 30) plonge,
**caractérisé en ce que**
le système d'affichage (10) est conçu pour sélectionner la zone de l'objet virtuel (24) dans laquelle la main virtuelle (28, 30) se déplace partiellement ou complètement transparente ou pour l'afficher sous la forme d'une animation en explosion décomposée en ses composants individuels, et que le système d'affichage (10) est conçu pour placer un corps enveloppant autour de la main virtuelle (28, 30) et pour le sélectionner, en plus la zone de l'objet virtuel (24) dans laquelle le corps enveloppant se déplace, partiellement ou complètement transparent et/ou avec pour détecter des gestes exécutés par la main (20, 22) de la personne (18) et pour effectuer des actions de pointage ou de manipulation correspondantes dans l'environnement virtuel affiché (26) et/ou au niveau de l'objet virtuel (24), de sorte que dès qu'un index étendu est détecté, une baguette d'indication virtuelle ou un pointeur laser est affiché(e), qui étend virtuellement un axe de doigt de l'index dans l'environnement virtuel (26).
